# EUROPEAN PATENT APPLICATION

(11) **EP 2 367 053 A2**
(43) Date of publication of application: **21.09.2011**
(21) Application number: 11158500.6
(22) Date of filing: 16.03.2011
(51) Int. Cl.: G03B 17/14, H04N 5/232

(54) **LENS APPARATUS**

(30) Priority: 19.03.2010 JP 2010064266
(71) Applicant: Fujifilm Corporation, Minato-ku Tokyo 106-8620 (JP)
(72) Inventor: Mizumura, Hiroshi, Saitama 331-9624 (JP)
(74) Representative: Klunker . Schmitt-Nilson . Hirsch

(57) **Abstract**

A lens apparatus (10) includes: an optical system detachably attached to a camera (50), the optical system configured to form an image of a subject on an image pickup plane of the camera; and a communication device (12) configured to perform data communication to and from an external apparatus (50, 52, 54) connected to a predetermined communication connector (40, 42, 44) provided in a casing of the lens apparatus, the communication device including: a communication port (20, 20A, 20B, 22, 24) configured to perform data communication, the communication port being connected to a predetermined pin (40A, 40B) of the communication connector; a communication protocol selection device (14, 60) configured to select a communication protocol for data communication performed through the communication port, from among predetermined plural types of communication protocols; and a communication protocol setting device (14) configured to set the communication protocol of the data communication performed through the communication port to a communication protocol selected by the communication protocol selection device.

## Description

### BACKGROUND OF THE INVENTION

### Field of the Invention

The presently disclosed subject matter relates to a lens apparatus, and particularly to a lens apparatus which performs data communication to and from an external apparatus such as a camera (camera body), a controller, and the like.

### Description of the Related Art

A lens apparatus detachably fitted to a TV (television) camera (camera body) for broadcasting or for professional use is configured to exchange data with a camera body to which the lens apparatus is fitted, thereby transmitting a status signal (a position signal) indicating the statuses of an optical system such as a focus, zoom, and iris mechanisms, information regarding the properties of the lens apparatus (lens information), and the like to the camera body, and receiving a control signal regarding the control of the optical system, such as iris control and the like, from the camera body.

Moreover, the lens apparatus also performs data exchange with external apparatuses, which are attachable/detachable to and from the lens apparatus, such as a focus controller (a focus demand), a zoom controller (a zoom demand) and a virtual system, as well as with the camera body (to be included in the external apparatuses).

Japanese Patent Application Laid-Open No. 2005-328496 proposes a lens apparatus connected with a virtual system, the lens apparatus configured to be able to exchange data even with a virtual system having a different connection scheme (an information transmission scheme). According to this disclosure, the virtual system includes those adopting a scheme based on analog voltage signal, a scheme based on digital pulse sequence, and a scheme based on data communication, as the connection scheme with the lens apparatus. And the lens apparatus is provided with input/output circuits for inputting/outputting signals compatible with each connection scheme so that the input/output circuit (hardware) to which the virtual system is connected is changed by hardware to connect the virtual system to an input/output circuit compatible with a connection scheme of the virtual system. For example, the virtual system is configured to be connected to an input/output circuit compatible with its connection scheme by setting the connector pin for connecting a signal line from the virtual system to one compatible with the connection scheme among connector pins connected to the input/output circuits compatible with each connection scheme, or by switching the connection of the virtual system connected to a connector to a connection to an input/output circuit compatible with the connection scheme by a switching device.

### SUMMARY OF THE INVENTION

By the way, in an external apparatus which is connected to a predetermined communication connector of a lens apparatus, while a data communication (a serial communication) is adopted as the connection scheme, the communication protocols may be different even among external apparatuses of the same type. Japanese Patent Application Laid-Open No. 2005-328496 does not consider such a case. Moreover, it is conceivable that dealing with the difference of the protocols as with the difference of the connection scheme in Japanese Patent Application Laid-Open No. 2005-328496, input/output circuits (communication ports) for inputting/outputting signals for each communication protocol are provided in the lens apparatus, and the communication port for connecting the external apparatuses is switched by hardware (a switch etc.) according to the communication protocol of the external apparatus. However, in such a case, cost needed for hardware will increase and the configuration will become complicated, which are undesirable.

The presently disclosed subject matter has been made in view of such circumstances, and has its object to provide a lens apparatus for performing data communication to and from an external apparatus connected to a communication connector by a predetermined communication protocol, the lens apparatus configured to enable data communication to and from an external apparatus without switching a communication port to which the external apparatus is connected, by a hardware configuration, even in cases where the communication protocol of the external apparatus connected to the communication connector varies according to a type of machine or the like.

To achieve the above described object, the lens apparatus according to a first aspect of the presently disclosed subject matter includes: an optical system detachably attached to a camera, the optical system configured to form an image of a subject on an image pickup plane of the camera; and a communication device configured to perform data communication to and from an external apparatus connected to a predetermined communication connector provided in a casing of the lens apparatus, the communication device including: a communication port configured to perform data communication, the communication port being connected to a predetermined pin of the communication connector; a communication protocol selection device configured to select a communication protocol for data communication performed through the communication port, from among predetermined plural types of communication protocols, based on an operation input of a user; and a communication protocol setting device configured to set the communication protocol of the data communication performed through the communication port to a communication protocol selected by the communication protocol selection device.

The lens apparatus according to a second aspect of the presently disclosed subject matter includes: an optical system detachably attached to a camera, the optical system configured to form an image of a subject on an image pickup plane of the camera; and a communication device configured to perform data communication to and from an external apparatus connected to a predetermined communication connector provided in a casing of the lens apparatus, the communication device including: a communication port configured to perform data communication, the communication port being connected to a predetermined pin of the communication connector; a determination device configured to determine whether or not communication is established between the communication port and an external apparatus connected to the communication connector; and a communication protocol setting device configured to determine whether or not communication is established by the determination device by successively switching the communication protocol of the data communication to be performed by the communication port to a different communication protocol from among predetermined plural types of communication protocols, and to continuously set the communication protocol for data communication to be performed by the communication port to a communication protocol at the time when communication is determined to be established.

The lens apparatus according to a third aspect of the presently disclosed subject matter includes: an optical system detachably attached to a camera, the optical system configured to form an image of a subject on an image pickup plane of the camera; and a communication device configured to perform data communication to and from an external apparatus connected to a predetermined communication connector provided in a casing of the lens apparatus, the communication device including: a plurality of communication ports configured to perform data communication, the communication ports being connected in parallel to predetermined pins of the communication connector; a determination device configured to determine whether or not communication is established between each of the plurality of communication ports and an external apparatus connected to the communication connector; and a communication protocol setting device configured to set the communication protocol of data communication to be performed by each of the plurality of communication ports to predetermined plural types of different communication protocols, and to determine between which communication port and the external apparatus communication is established by the determination device, thereby enabling data communication performed by a communication port in which communication is determined to be established and disabling data communication performed through another communication port.

The lens apparatus according to a fourth aspect of the presently disclosed subject matter includes: an optical system detachably attached to a camera, the optical system configured to form an image of a subject on an image pickup plane of the camera; and a communication device configured to perform data communication to and from an external apparatus connected to a predetermined communication connector provided in a casing of the lens apparatus, the communication device including: a plurality of input ports configured to perform data reception in data communication, the input ports being connected in parallel to one data reception pin of the communication connector; an output port configured to perform data transmission in data communication, the output port being connected in parallel to a data transmission pin of the communication connector; a determination device configured to determine whether or not communication is established between each of the plurality of input ports and an external apparatus connected to the communication connector; and a protocol setting device configured to set the communication protocol of data communication for data reception performed by each of the plurality of input ports to predetermined plural types of different communication protocols, and to determine between which input port and the external apparatus communication is established by the determination device, thereby enabling data reception performed by the input port in which communication is determined to be established, and disabling data reception by another input port, and setting the communication protocol of data communication for data transmission by an output port connected to the data transmission pin to a communication protocol of the input port in which the communication is determined to be established.

The lens apparatus according to a fifth aspect of the presently disclosed subject matter includes: an optical system detachably attached to a camera, the optical system configured to form an image of a subject on an image pickup plane of the camera; and a communication device configured to perform data communication to and from an external apparatus connected to a predetermined communication connector provided in a casing of the lens apparatus, the communication device including: a communication port configured to perform data communication, the communication port being connected to a predetermined pin of the communication connector; a communication protocol selection device configured to select a communication protocol for data communication performed through the communication port, from among predetermined plural types of communication protocols, based on an operation input of a user; a first communication protocol setting device configured to set the communication protocol of the data communication performed through the communication port to a communication protocol selected by the communication protocol selection device; a determination device configured to determine whether or not communication is established between the communication port and an external apparatus connected to the communication connector; a second communication protocol setting device configured to determine whether or not communication is established by the determination device by successively switching the communication protocol of the data communication to be performed by the communication port to a different communication protocol from among predetermined plural types of communication protocols, and to continuously set the communication protocol for data communication to be performed by the communication port to a communication protocol at the time when communication is determined to be established; and a manual/automatic selection device configured to select either of the first communication protocol setting device and the second communication protocol setting device to set the communication protocol of the data communication to be performed by the communication port, based on an instruction of the user.

The lens apparatus according to a sixth aspect of the presently disclosed subject matter is a lens apparatus according to any one of the first to fifth aspects of the presently disclosed subject matter, wherein the external apparatus to be connected to the communication connector is the camera.

According to the first to sixth aspects of the presently disclosed subject matter, even in a case where the communication protocol of the external apparatus to be connected to the communication connector differs depending on the models of the external apparatus, data communication to and from the external apparatus is made possible without switching the communication port to which the external apparatus is connected, by a hardware configuration. The first, second, and fifth aspects of the presently disclosed subject matter are based on changing the communication protocol of the communication port to which an external apparatus is connected, where the first aspect of the presently disclosed subject matter is based on a mode of implementation in which a user sets a selected type of communication protocol, and the second aspect of the presently disclosed subject matter is based on a mode of implementation in which an appropriate communication protocol is automatically set. The fifth aspect of the presently disclosed subject matter is configured such that a user can select the modes of the first and second aspects.

The third and fourth aspects of the presently disclosed subject matter is based on a mode of implementation in which, instead of changing the communication protocol of the communication port to which an external apparatus is connected, communication ports which are set to a plurality of communication protocols are connected in parallel to an external apparatus so that communication ports which are capable for communication are effectively used.

According to the presently disclosed subject matter, data communication to and from an external apparatus is made possible without switching communication ports to which the external apparatus is connected, by hardware, even when the communication protocol differs depending on the kinds of the external apparatus to be connected to a connector.

### BRIEF DESCRIPTION OF THE DRAWINGS

Fig. 1 is a block diagram illustrating an external apparatus communicably connected to a lens apparatus for broadcasting or for professional use;
Fig. 2 illustrates the configuration of a lens apparatus according to a first embodiment of the presently disclosed subject matter;
Fig. 3 is a flowchart illustrating the procedure of the protocol setting of a communication port in the first embodiment;
Fig. 4 illustrates the configuration of a lens apparatus according to a second embodiment of the presently disclosed subject matter;
Fig. 5 is a flowchart illustrating the procedure of the protocol setting of a communication port in the second embodiment;
Fig. 6 illustrates the configuration of a lens apparatus according to a third embodiment of the presently disclosed subject matter;
Fig. 7 is a flow chart illustrating the procedure of the protocol setting of a communication port in the third embodiment;
Figs. 8A and 8B are flow charts illustrating the procedure of the protocol setting of a communication port in the third embodiment; and
Fig. 9 illustrates the configuration of a lens apparatus according to another embodiment, which is a partial modification of the configuration of the third embodiment.

### DETAILED DESCRIPTION OF THE PREFERRED EMBODIMENTS

Hereafter, referring to appended drawings, embodiments for implementing a lens apparatus relating to the presently disclosed subject matter will be described in detail.

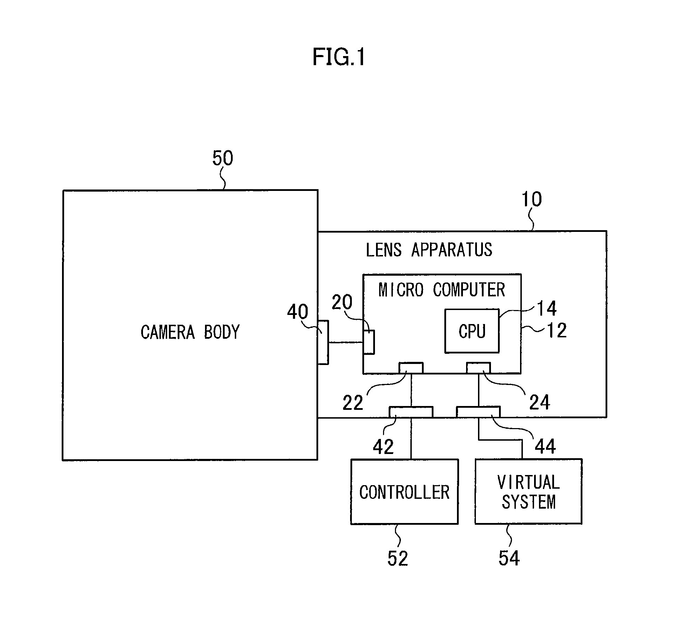

Fig. 1 is a block diagram illustrating an example of an external apparatus which is communicably connected to a lens apparatus for broadcasting or for professional use. A lens apparatus 10 includes an optical system (not illustrated) configured to form an image of a subject on an image pickup plane of a camera. There are disposed in the optical system, a fixed lens group and movable optical members, such as a focus lens group, a zoom lens group, and an iris, which are driven manually or electrically for optical adjustment (focus adjustment, focal distance adjustment, intensity adjustment, and the like).

Moreover, the lens apparatus 10 includes a control system for performing the control and the status detection (position detection) of the above described movable optical members, and the control system includes a control unit 12 having various functions and illustrated in Fig. 1, as a principal component. This control unit 12 performs the control of a motor for electrically driving the above described movable optical members, and the reading of position signals of each movable optical member, and the like. Further, the control unit 12 includes a communication function (an action as a communication device) and is provided with one or more communication ports, so that data communication (serial communication) is conducted with an external apparatus connected to a predetermined connector of the lens apparatus through this communication port.

It is noted that the lens apparatus 10 may have any configuration such as one in which component members of the optical system and the control system are accommodated in a casing having a box shape (such as an EFP lens), and one in which a casing accommodating the component members of the control system is fitted to the side part of a lens holding frame which supports the component members of the optical system (such as an ENG lens). Moreover, the lens apparatus may be configured such that a motor for driving the movable optical system is not installed in the control system, but only status detection is performed to output that information to an external apparatus.

As an example of an external apparatus which is communicably connected to the lens apparatus 10, Fig. 1 illustrates: a camera body 50 which includes an image pickup element and a signal processing circuit, and to which a lens apparatus (an optical system) is detachably fitted; a controller 52 (such as a focus demand and a zoom demand) which provides indicating signals (instruction signals) of the moving position and moving velocity, etc. of the movable optical members driven by a motor of a focus lens group, a zoom lens group, or the like, to the lens apparatus 10 (a control unit 12); and a virtual system 54 (such as a PC (personal computer)) which combines a photographed image or a photographed video picture obtained from the camera body 50 with a computer graphics (CG) created by a computer. However, the external apparatus communicably connected to the lens apparatus 10 is not limited to these examples.

These external apparatuses 50, 52, and 54 are respectively connected to predetermined connectors (communication connectors) 40, 42, and 44 of the lens apparatus 10 through a cable or directly, thereby being respectively connected to predetermined communication ports (input/output circuits) 20, 22, and 24 provided with the control unit 12 through a signal line.

The control unit 12 includes a CPU (central processing unit) 14 which performs arithmetic operation. The CPU 14 is configured to perform data communication to and from the external apparatuses 50, 52, and 54 through communication ports 20, 22, and 24 according to a predetermined communication protocol so that various data is exchanged between the lens apparatus 10 and the external apparatuses 50, 52, and 54.

For example, in the data communication between the lens apparatus 10 and the camera body 50, status signals (position signals) that indicate the set statuses of the movable optical members such as a focus lens group, a zoom lens group, an iris, and the like (for example, positions thereof), and the information relating to the property of the lens apparatus 10 (lens information) are transmitted from the lens apparatus 10 to the camera body 50. And control signals for controlling the movable optical members and the like are transmitted from the camera body 50 to the lens apparatus 10. Moreover, in the data communication between the lens apparatus 10 and the controller 52, an indicating signal for causing a predetermined movable optical member to move to a predetermined target position, and an indicating signal for causing the predetermined movable optical member to move at a target velocity are transmitted primarily from the controller 52 to the lens apparatus 10. Further, in the data communication between the lens apparatus 10 and a virtual system 54, status signals (position signals) indicating the set statuses of the movable optical members, information relating to the property of the lens apparatus (lens information), and the like are transmitted primarily from the lens apparatus 10 to the virtual system 54.

Hereafter, the data communication between the lens apparatus 10 and any external apparatus will be described taking an example of the data communication between the lens apparatus 10 and the camera body 50. Some camera bodies 50, which are to be connected to a connector 40 of the lens apparatus 10 provided for communication with the camera bodies 50, may have a different communication protocol. In the present embodiment, for the camera body 50 it is assumed that there are two types of communication protocols due to the difference in the manufacturer, etc. (difference in model), and those communication protocols are identified by reference characters A and B. For example, one communication protocol is designated as an A type, or a communication protocol A, and the other is designated as a B type, or a communication protocol B.

On the other hand, if a communication port 20 of the control unit 12, which is connected with the camera body 50, performs data communication through a different type of communication protocol than that of the camera body 50, the control unit 12 cannot perform data communication to and from the camera body 50.

Then, according to the lens apparatus 10 of the present embodiment, configuration is made such that the data communication to and from the camera body 50 can be performed as described below without changing the hardware configuration (and also without changing the form of connection of the circuit by a switch and the like), regardless of that the communication protocol of the camera body 50 connected to the connector 20 is of A type or B type.

Here, setting the CPU 14 to a processing status in which data transmitted/received by the communication port 20 according to a communication protocol of a predetermined type can be handled is referred to as a protocol setting of the communication port 20 and, for example, setting the CPU 14 to a processing status in which data transmitted/received by the communication port 20 according to the A type communication protocol can be handled is represented by an expression such as "the communication port 20 is set to an A type communication protocol".

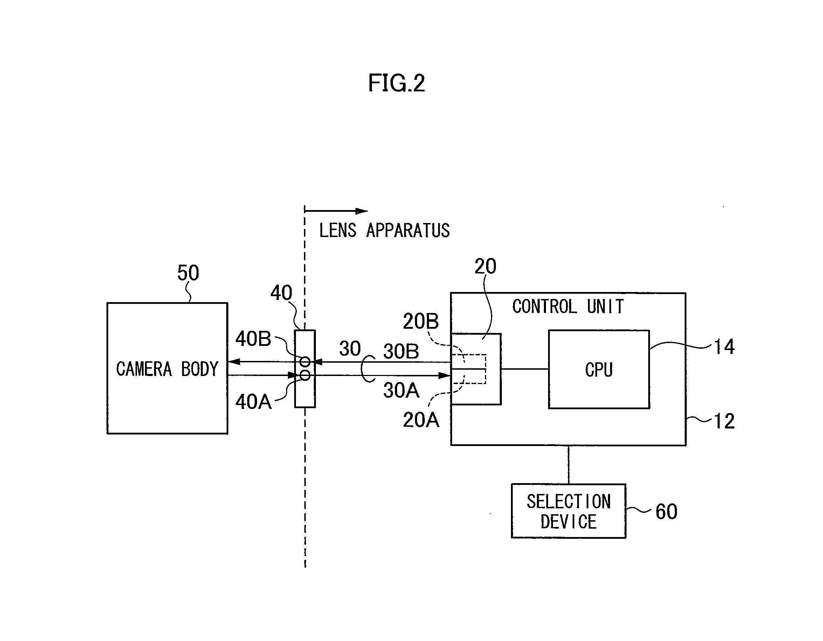

Fig. 2 illustrates the configuration of a lens apparatus 10 according to a first embodiment of the presently disclosed subject matter.

As illustrated in Fig. 2, a signal line 30 from one communication port 20 of a control unit 12 is connected to a connector 40 for camera communication of a lens apparatus 10, and configuration is made such that upon connection of the camera body 50 to the connector 40, a signal line from the camera body 50 (a communication port of the camera body 50 side) is connected to the one communication port 20 of the control unit 12.

To be more specific, the communication port 20 includes a pair of an input port 20A and an output port 20B. The input port 20A is a port for receiving data by a receiver (not illustrated), and the output port 20B is a port for transmitting data by a driver (not illustrated). The input port 20A and the output port 20B are respectively connected to a data reception pin 40A and a data transmission pin 40B of the connector 40 via signal lines 30A and 30B. Upon connection of the camera body 50 to the connector 40, data transmitted from the camera body 50 enters from the data reception pin 40A of the connector 40 as reception data of the lens apparatus 10 side, and is inputted into the input port 20A via the signal line 30A. On the other hand, configuration is made such that the data outputted from the output port 20B as the transmission data from the lens apparatus 10 side is outputted to the camera body 50 from the data transmission pin 40B of the connector 40 via the signal line 30B.

Moreover, the lens apparatus 10 is provided with a communication protocol selection device (for example, a switch) 60 which selects the type of the communication protocol of the communication port 20, based on an operation (instruction) of a user, so that either of the A type and B type of communication protocols can be selected by means of the communication protocol selection device 60. Further, configuration is made such that information indicating the type selected by the communication protocol selection device 60 is read into the CPU 14 of the control unit 12, and the communication protocol of the communication port 20 is set by the CPU 14 to the type selected by the protocol selection device 60.

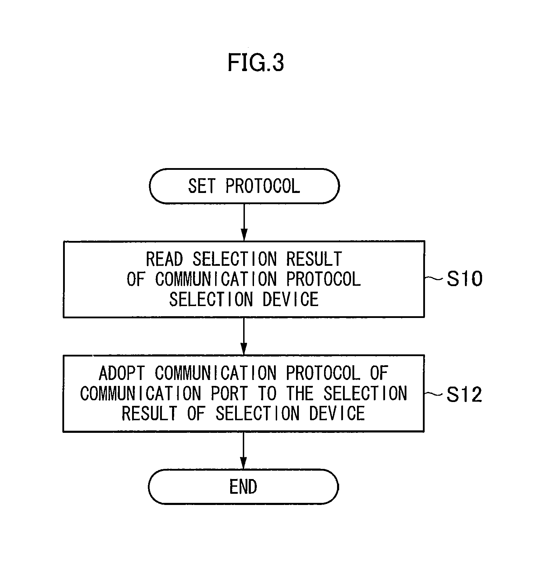

Such protocol setting of communication port is performed for example, upon turning on the power or selecting/changing a communication protocol by the protocol selection device 60 (upon operation of a user of the communication protocol selection device 60). As illustrated in the flowchart in Fig. 3, upon entering into a processing routine of protocol setting, the CPU 14 first reads the type (A type or B type) of the communication protocol selected by the communication protocol selection device 60 (step S10). Then, the communication port 20 is set to the communication protocol of the type read in (step S12), and the processing routine of protocol setting is finished.

According to this procedure, when a user selects the type of the communication protocol of the camera body 50 to which the lens apparatus 10 is connected by means of the communication protocol selection device 60, data communication will be normally performed between the lens apparatus 10 and the camera body 50.

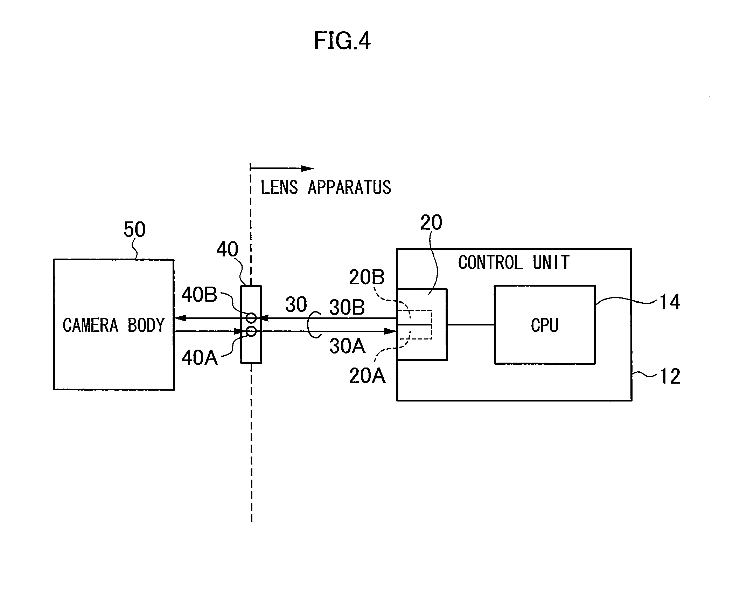

Fig. 4 is a diagram illustrating the configuration of a lens apparatus according to a second embodiment of the presently disclosed subject matter, where like or similar components to those of Fig. 2 are given the same reference characters thereby omitting the description thereof. The lens apparatus 10 according to the second embodiment is configured as with the lens apparatus 10 according to the first embodiment, such that when a signal line 30 from one communication port 20 of the control unit 12 is connected to the connector 40 for camera communication of the lens apparatus 10, and the camera body 50 is connected to the connector 40, a signal line from the camera body 50 (a communication port of the camera body 50 side) is connected to one communication port 20 of the control unit 12. On the other hand, a communication protocol selection device 60 to be operated by a user is not provided, and it is configured that the protocol setting of communication port is performed automatically.

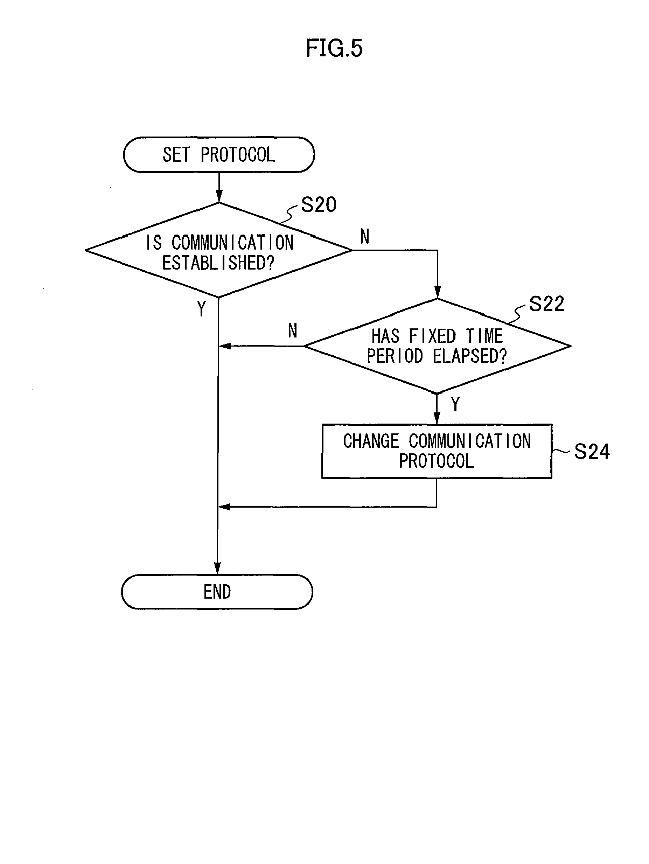

Fig. 5 is a flowchart illustrating the procedure of the protocol setting of communication port in the second embodiment. The processing routine for protocol setting of Fig. 5 is repeatedly performed from the time of powering on at every fixed time period (for example, at every second). Moreover, when performing this processing routine for the first time, the CPU 14 sets the communication port 20 to a communication protocol of a predetermined type (for example, A type). At and after the second time, the communication port 20 has been set to the communication protocol at the time before entering this processing routine.

Upon entering into a processing routine for protocol setting, the CPU14 first determines whether or not communication is established between the communication port 20 and the camera body 50 (step S20). When the determination result is YES, since the current communication protocol of the communication port 20 is compatible with that of the camera body 50 (since communication is normally conducted), the processing routine for protocol setting will be finished as it is.

On the other hand, when the determination result is NO in step S20, time measurement from the time when the determination result is NO for the first time in step S20 is performed, and determination is made on whether or not a fixed time period has elapsed (step S22). Then, when the determination result is NO, the process temporarily gets out of the processing routine, and after performing other processing, reenters this processing routine to perform the determination processing of step S20. Thereby, the processing of step S20 and step S22 are repeated while communication is not established, and until a fixed time period elapses. When communication is established before a fixed time period elapses, and the determination result is YES in step S20, the processing routine for protocol setting is finished as it is. That is, in a state in which communication is established, even if the processing routine is repeated at a fixed time interval, the communication protocol of the communication port 20 is kept being set to the communication protocol at the time when communication is established.

If a fixed time period elapses in a state in which communication is not established, the determination result will be NO in step S22. At this moment, the CPU 14 determines that the communication protocol of the communication port 20 is different from that of the camera body 50, and sets the communication port 20 to a communication protocol of a different type than the current one (step S24). Then, the processing routine is finished.

According to the procedure of protocol setting as described above, the above described processing routine is repeated at a fixed time interval so that finally, the communication protocol of the communication port 20 is automatically set to be compatible with the communication protocol of the camera body 50, and the status is maintained. It is noted that after communication between the communication port 20 and the camera body 50 is established, configuration may be such that the communication protocol of the communication port is fixed as it is, and the above described processing routine is not executed. Further, when the determination result is NO in step S22, the process may return directly to step S20 instead of getting out of the above described processing routine.

The above described procedure of protocol setting of the second aspect can be performed after or in parallel with the procedure of the first aspect is performed. Further, a lens apparatus according to the presently disclosed subject matter can be configured such that a user can select a result from among a manually selected protocol selected by the procedure of protocol setting of the first aspect and an automatically selected protocol selected by the procedure of protocol setting of the second aspect, by inputting an instruction using a manual/automatic selection device included in the lens apparatus.

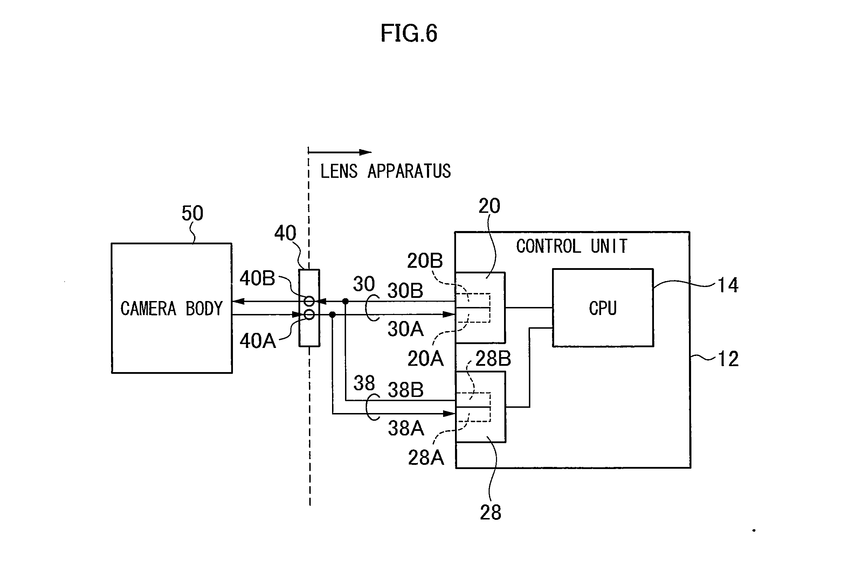

Fig. 6 illustrates the configuration of a lens apparatus according to a third embodiment of the presently disclosed subject matter, where like or similar components to those of Fig. 4 are given the same reference characters thereby omitting description thereof. While the lens apparatus 10 according to the third embodiment is one that enables automatic data communication to and from the camera body 50 as in the second embodiment, it has a different configuration from that of the second embodiment. That is, when two communication ports 20 and 28 of the control unit 12 are connected in parallel to the connector 40 for camera communication of the lens apparatus 10 by signal lines 30 and 38, respectively, and the camera body 50 is connected to the connector 40, the signal line from the camera body 50 (one communication port of the camera body 50 side) is configured to be branched into two lines and connected to the two communication ports 20 and 28 of the control unit 12. Thus, it is configured such that the two communication ports 20 and 28 of the control unit 12 receive the input of the same signal transmitted from the camera body 50. It is noted that the specific configurations of the communication port 28 and the signal line 38 are similar to those of the communication port 20 and the signal line 30; the communication port 28 includes a pair of input port 28A and output port 28B; the input port 28A is a port that receives data by a receiver (not illustrated); the output port 28B is a port that transmits data by a driver (not illustrated). The input port 28A and the output port 28B are respectively connected to a data reception pin 40A and a data transmission pin 40B of the connector 40 via signal lines 38A and 38B.

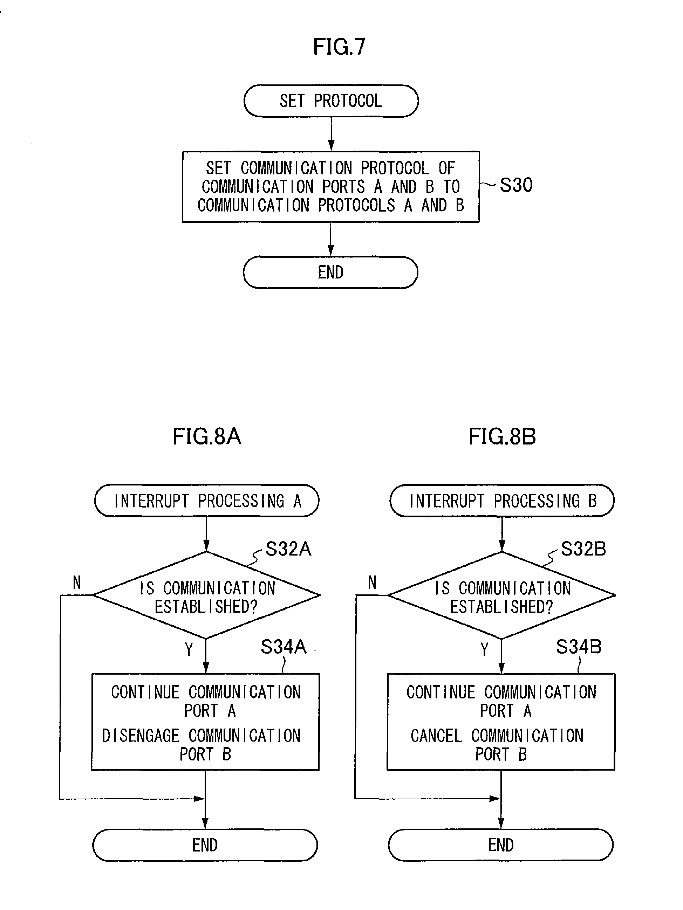

Fig. 7 is a flowchart illustrating the procedure of the protocol setting of a communication port in the third embodiment. It is noted that the communication port 20 is designated as a communication port A, and the communication port 28 as a communication port B. Upon entering the processing routine for protocol setting at the time of powering on, the CPU 14 first set the communication protocol of one communication port A (20) to a communication protocol of A type, and the communication protocol of the other communication port B (28) to a communication protocol of type B (step S30). Then, the processing routine for protocol setting is finished.

On the other hand, after the processing routine is executed, the communication ports A an B receive the input of signals transmitted from the camera body 50, and an interrupt signal indicating the reception of the signals is inputted to the CPU 14 from each communication port A, B. Upon reception of the interrupt signal from the communication port A, the CPU 14 starts the processing routine for interrupt processing A of Fig. 8A, and determines whether or not communication between the communication port A and the camera body 50 is established (step S32A). It is noted that when communication is not established, since a signal of communication error is provided to the CPU 14 from the communication port A, determination on if communication is established is made according to the presence/absence of the signal of communication error. When the determination result is YES (communication established) in step S32A, the CPU 14 continues to enable the communication by the communication port A which is being set to the communication protocol of type A as it is, and thereafter performs communication with the camera body 50 by using the communication port A. Moreover, the CPU 14 disables the communication by the communication port B which is being set to the other communication protocol of type B, and cancels the communication by the communication port B. Then, this processing routine for interrupt processing A is finished.

When the determination result is NO in step S32A, the processing routine for interrupt processing A is finished without any action.

Similarly, upon reception of an interrupt signal from the communication port B, the CPU 14 starts the processing routine for the interrupt processing B of Fig. 8B, and determines whether or not communication between the communication port B and the camera body 50 is established (step S32B). It is noted that as with the interrupt processing A, determination on if communication is established is made according to the presence/absence of a signal of communication error from the communication port B. When the determination result is YES (communication established) in step S32B, the CPU 14 continues to enable the communication by the communication port B which is being set to a communication protocol of type B, and thereafter performs communication with the camera body 50 by using the communication port B. Further, the CPU 14 disables the communication by the communication port A which is being set to the other communication protocol of type A, and cancels the communication by the communication port A. Then, this processing routine for interrupt processing B is finished.

When the determination result is NO in step S32B, the processing routine for interrupt processing B is finished without any action.

As the result of the processing described above, data communication to and from the camera body 50 will be conducted by a communication port, which is set to the same type of the communication protocol as that of the camera body 50.

In the first to third embodiments described above, it is assumed that the communication port 20 (28) of the control unit 12 includes a pair of an input port 20A (28A) and an output port 20B (28B). However, when the lens apparatus 12 only performs reception of the data transmitted from the camera body 50 and does not perform transmission, the output port 20B (28B) is unnecessary and therefore there is a case in which the output port 20B (28B) is not provided. On the contrary, there is a case in which the input port 20A (28A) is not provided. Therefore, in such cases, the above described embodiments may be applied with only one input port or one output port being as one communication port.

In the above described first to third embodiments, description has been made on the case in which the camera body 50, which is connected to a connector 40 for camera communication of the lens apparatus 10, can perform data communication by either of two communication protocols A and B (the case in which there are two types of communication protocols for a camera body which can be connected to the connector 40 of the lens apparatus 10. However, the presently disclosed subject matter can be similarly applied even to a case in which there are three or mote types of communication protocols of the camera body. For example, it is assumed that with N being any integer not less than two, and there are N types of communication protocols of camera body. And, configuration may be such that, in the first embodiment, the communication protocol of the communication port 20 of the lens apparatus 10 can be set to the N types of communication protocols, and a desired communication protocol among the N types can be selected by a communication protocol selection device 60. In the second embodiment, configuration may be such that the communication protocol of the communication port 20 of the lens apparatus 10 can be set to the N types of communication protocols, and then N types of communication protocols are successively switched so that the communication port 20 is finally set to the communication protocol by which communication is finally established. In the third embodiment, configuration may be such that N communication ports of the lens apparatus 10 are connected in parallel to the camera body (a data reception pin 40A and a data transmission pin 40B of the connector 40), and N types of communication protocols are assigned to the N communication ports so that the communication port at which communication is established can be used for the data communication to and from the camera body 50.

Moreover, in the third embodiment which is made compatible with N types of communication protocols as described above, while a pair of the input port and the output port of each of the N communication ports of the control unit 12 are to be connected to a data reception pin 40A and a data transmission pin 40B of the connector 40 with signal lines, regarding the output port, only the output port of any one of N communication ports, or only the output port in one communication port other than the N communication ports may be connected to the data transmission pin 40B.

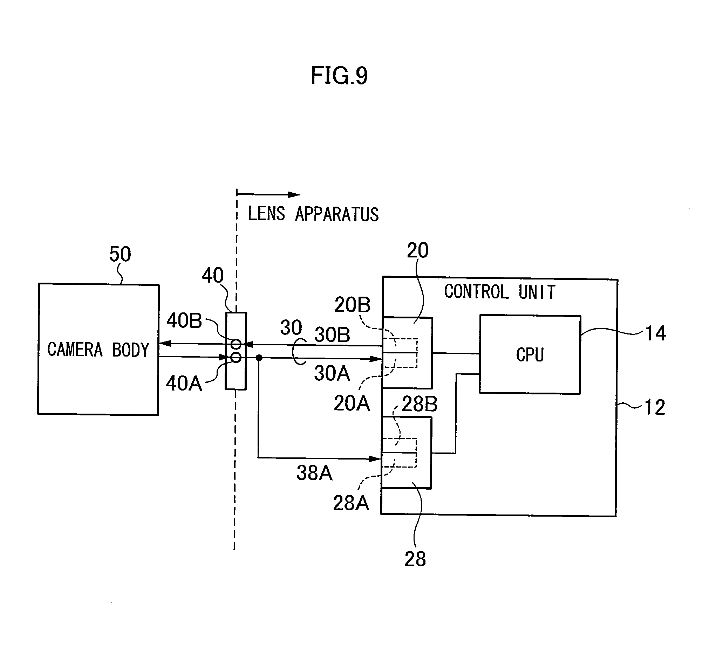

For example, for the configuration of Fig. 6 illustrating the third embodiment in the case of N=2, the output port 28B of the communication port 28 is not connected to the data transmission pin 40 as illustrated in Fig. 9, and only the output port 20B of the communication port 20 is connected to the data transmission pin 40B.

In the configuration as described above, determination is made on with which reception port among N communication ports assigned with N types of communication protocols, communication is established to and from the camera body 50 (if data from the camera body 50 is received), and the communication protocol of the output port connected to the data transmission pin 40B is set to the communication protocol of the reception port with which the communication is established so that data communication with the camera body 50 is performed by using the reception port with which the communication is established and the output port connected to the data transmission pin 40B.

Moreover, in the above described embodiments, description has been made by taking the camera body 50 as an example of the external apparatus connected to the predetermined connector of the lens apparatus and configured to perform data communication. However, the presently disclosed subject matter can be applied, even when the external apparatus is not the camera body, to the case (or cases) in which the communication protocol of the external apparatus connected to the same communication connector of the lens apparatus 10, differs depending on the models of the external apparatus and the like, in any external apparatus such as a controller and a virtual system which are connected to the communication connector of the lens apparatus 10.

## Claims

1. A lens apparatus (10) comprising:
an optical system detachably attached to a camera (50), the optical system configured to form an image of a subject on an image pickup plane of the camera; and
a communication device (12) configured to perform data communication to and from an external apparatus (50, 52, 54) connected to a predetermined communication connector (40, 42, 44) provided in a casing of the lens apparatus, the lens apparatus **characterized in that**
the communication device includes:
a communication port (20, 20A, 20B, 22, 24) configured to perform data communication, the communication port being connected to a predetermined pin (40A, 40B) of the communication connector;
a communication protocol selection device (60) configured to select a communication protocol for data communication performed through the communication port, from among predetermined plural types of communication protocols, based on an operation input of a user; and
a first communication protocol setting device (14) configured to set the communication protocol of the data communication performed through the communication port to a communication protocol selected by the communication protocol selection device.

2. A lens apparatus (10) comprising:
an optical system detachably attached to a camera (50), the optical system configured to form an image of a subject on an image pickup plane of the camera; and
a communication device (12) configured to perform data communication to and from an external apparatus (50, 52, 54) connected to a predetermined communication connector (40, 42, 44) provided in a casing of the lens apparatus, the lens apparatus **characterized in that**
the communication device includes:
a communication port (20, 20A, 20B, 22, 24) configured to perform data communication, the communication port being connected to a predetermined pin (40A, 40B) of the communication connector;
a determination device (14) configured to determine whether or not communication is established between the communication port and an external apparatus connected to the communication connector; and
a communication protocol setting device (14) configured to determine whether or not communication is established by the determination device by successively switching the communication protocol of the data communication to be performed by the communication port to a different communication protocol from among predetermined plural types of communication protocols, and to continuously set the communication protocol for data communication to be performed by the communication port to a communication protocol at the time when communication is determined to be established.

3. A lens apparatus (10) comprising:
an optical system detachably attached to a camera (50), the optical system configured to form an image of a subject on an image pickup plane of the camera; and
a communication device (12) configured to perform data communication to and from an external apparatus (50, 52, 54) connected to a predetermined communication connector (40, 42, 44) provided in a casing of the lens apparatus, the lens apparatus **characterized in that**
the communication device includes:
a plurality of communication ports (20, 20A, 20B, 22, 24, 28, 28A, 28B) configured to perform data communication, the communication ports being connected in parallel to predetermined pins (40A, 40B) of the communication connector;
a determination device (14) configured to determine whether or not communication is established between each of the plurality of communication ports and an external apparatus connected to the communication connector; and
a communication protocol setting device (14) configured to set the communication protocol of data communication to be performed by each of the plurality of communication ports to predetermined plural types of different communication protocols, and to determine between which communication port and the external apparatus communication is established by the determination device, thereby enabling data communication performed by a communication port in which communication is determined to be established and disabling data communication performed through another communication port.

4. A lens apparatus (10) comprising:
an optical system detachably attached to a camera (50), the optical system configured to form an image of a subject on an image pickup plane of the camera; and
a communication device (12) configured to perform data communication to and from an external apparatus (50, 52, 54) connected to a predetermined communication connector (40, 42, 44) provided in a casing of the lens apparatus, the lens apparatus **characterized in that**
the communication device includes:
a plurality of input ports (20A, 28A) configured to perform data reception in data communication, the input ports being connected in parallel to one data reception pin (40A) of the communication connector;
an output port (20B) configured to perform data transmission in data communication, the output port being connected in parallel to a data transmission pin (40B) of the communication connector;
a determination device (14) configured to determine whether or not communication is established between each of the plurality of input ports and an external apparatus connected to the communication connector; and
a protocol setting device (14) configured to set the communication protocol of data communication for data reception performed by each of the plurality of input ports to predetermined plural types of different communication protocols, and to determine between which input port and the external apparatus communication is established by the determination device, thereby enabling data reception performed by the input port in which communication is determined to be established, and disabling data reception by another input port, and setting the communication protocol of data communication for data transmission by an output port connected to the data transmission pin to a communication protocol of the input port in which the communication is determined to be established.

5. The lens apparatus according to claim 1, wherein the communication device further including:
a determination device (14) configured to determine whether or not communication is established between the communication port and an external apparatus connected to the communication connector;
a second communication protocol setting device (14) configured to determine whether or not communication is established by the determination device by successively switching the communication protocol of the data communication to be performed by the communication port to a different communication protocol from among predetermined plural types of communication protocols, and to continuously set the communication protocol for data communication to be performed by the communication port to a communication protocol at the time when communication is determined to be established; and
a manual/automatic selection device configured to select either of the first communication protocol setting device and the second communication protocol setting device to set the communication protocol of the data communication to be performed by the communication port, based on an instruction of the user.

6. The lens apparatus according to any one of claims 1 to 5, wherein the external apparatus to be connected to the communication connector is the camera.
